(19) Europäisches Patentamt
European Patent Office
Office européen des brevets

(11) EP 2 014 169 A1

(12) EUROPÄISCHE PATENTANMELDUNG

(43) Veröffentlichungstag:
**14.01.2009 Patentblatt 2009/03**

(21) Anmeldenummer: **07112052.1**

(22) Anmeldetag: **09.07.2007**

(51) Int Cl.:
***A01N 43/90*** *(2006.01)* ***A01N 43/36*** *(2006.01)*
***A01N 43/38*** *(2006.01)* ***A01N 25/02*** *(2006.01)*

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Bayer CropScience AG
40789 Monheim (DE)**

(72) Erfinder: **Die Erfindernennung liegt noch nicht vor**

(54) **Wasserlösliche Konzentrate von 3-(2-Alkoxy-4-chlor-6-alkyl-phenyl)-substituierten Tetramaten und ihren korrespondierenden Enolen**

(57) Die vorliegende Erfindung betrifft neue wasserlösliche Konzentrate von 3-(2-Alkoxy-4-chlor-6-alkylphenyl)-substituierten Tetramaten und deren Enole, Verfahren zur Herstellung dieser Formulierungen und ihre Verwendung als Schädlingsbekämpfungsmittel und/oder Herbizide.

EP 2 014 169 A1

Printed by Jouve, 75001 PARIS (FR)

**Beschreibung**

Die vorliegende Erfindung betrifft neue wasserlösliche Konzentrate (SL-Formulierungen) von 3-(2-Alkoxy-4-chlor-6-alkyl-phenyl)-substituierten Tetramaten und deren Enole, Verfahren zur Herstellung dieser Formulierungen und ihre Verwendung als Herbizide.

Von 3-Acyl-pyrrolidin-2,4-dionen sind pharmazeutische Eigenschaften vorbeschrieben (S. Suzuki et al. Chem. Pharm. Bull. 15 1120 (1967)). Weiterhin wurden N-Phenylpyrrolidin-2,4-dione von R. Schmierer und H. Mildenberger (Liebigs Ann. Chem. 1985, 1095) synthetisiert. Eine biologische Wirksamkeit dieser Verbindungen wurde nicht beschrieben.

In EP-A-0 262 399 und GB-A-2 266 888 werden ähnlich strukturierte Verbindungen (3-Aryl-pyrrolidin-2,4-dione) offenbart, von denen jedoch keine herbizide, insektizide oder akarizide Wirkung bekannt geworden ist. Bekannt mit herbizider, insektizider oder akarizider Wirkung sind unsubstituierte, bicyclische 3-Aryl-pyrrolidin-2,4-dion-Derivate (EP-A-355 599, EP-A-415 211 und JP-A-12-053 670) sowie substituierte monocyclische 3-Aryl-pyrrolidin-2,4-dion-Derivate (EP-A-377 893 und EP-A-442 077).

Weiterhin bekannt sind polycyclische 3-Arylpyrrolidin-2,4-dion-Derivate (EP-A-442 073) sowie 1H-Arylpyrrolidin-dion-Derivate (EP-A-456 063, EP-A-521 334, EP-A-596 298, EP-A-613 884, EP-A-613 885, WO 94/01 997, WO 95/26 954, WO 95/20 572, EP-A-0 668 267, WO 96/25 395, WO 96/35 664, WO 97/01 535, WO 97/02 243, WO 97/36 868, WO 97/43275, WO 98/05638, WO 98/06721, WO 98/25928, WO 99/24437, WO 99/43649, WO 99/48869 und WO 99/55673, WO 01/17972, WO 01/23354, WO 01/74770, WO 03/013249, WO 03/062244, WO 2004/007448, WO 2004/024 688, WO 04/065366, WO 04/080962, WO 04/111042, WO 05/044791, WO 05/044796, WO 05/048710, WO 05/049596, WO 05/066125, WO 05/092897, WO 06/000355, WO 06/029799, WO 06/056281, WO 06/056282, WO 06/089633 und WO 07/048545. Außerdem sind ketalsubstituierte 1-H-Arylpyrrolidin-2,4-dione aus WO 99/16748 und (spiro)-ketalsubstituierte N-Alkoxy-alkoxy-substituierte Aryl-pyrrolidindione aus JP-A-14 205 984 und Ito M. et. al Bioscience, Biotechnology and Biochemistry 67, 1230-1238, (2003) bekannt. 3-(2-Alkoxy-4-chlor-6-alkyl-phenyl)-substituierte Tetramsäuren sind bekannt aus WO 2004/080962

Die herbizide Wirksamkeit und/oder Wirkungsbreite und/oder die Pflanzenverträglichkeit der bekannten Verbindungen, insbesondere gegenüber Kulturpflanzen, ist jedoch nicht immer ausreichend.

Es wurde nun gefunden, dass Zusammensetzung, enthaltend eine Phase enthaltend mindestens einen gelösten Wirkstoff der Formeln (I-A) und (I-B)

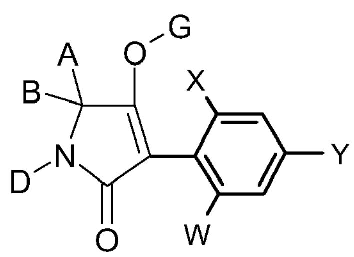

(I-A)

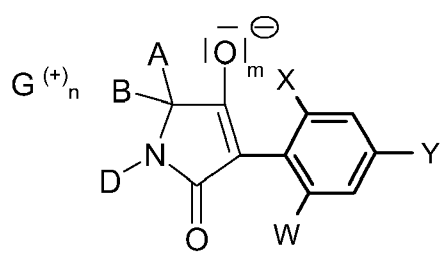

(I-B)

in welchen

X für Methoxy oder Ethoxy steht,

W für Methyl oder Ethyl steht,

Y für Chlor steht,

G für Wasserstoff, Lithium, Natrium, oder Kalium steht,

m für die Zahl 1 steht,

n für die Zahl 1 steht,

A für $C_1$-$C_4$-Alkyl oder Cyclopropyl steht,

B für Methyl steht,

D für Wasserstoff steht

oder

A, B und das Kohlenstoffatom an das sie gebunden sind, gemeinsam für gesättigtes $C_5$-$C_6$-Cycloalkyl, in welchem gegebenenfalls ein Ringglied durch Sauerstoff ersetzt ist und welches gegebenenfalls einfach durch Methyl, Methoxy oder Ethoxy substituiert ist, stehen,

oder
A und D gemeinsam für $C_3$-$C_4$-Alkylidenylgruppe stehen,
einen schnelleren Wirkeintritt und/oder eine besserere Kulturpflanzenverträglichkeit und/oder eine höhere Wirksamkeit aufweisen als beispielsweise entsprechende WP- oder SC-Formulierungen, in denen der Wirkstoff der Formel (I-A) oder (I-B) partikulär vorliegt, solange die Formulierung nicht in Wasser verdünnt wird.

Dies ist besonders überraschend, weil aufgrund der sehr hohen Wasserlöslichkeit der Wirkstoffe ausgehend von jedem Formuliertyp nach Verdünnen in Wasser eine sofortige Verfügbarkeit - und damit eine Unabhängigkeit der Wirkung vom ursprünglichen Formulierungstyp - zu erwarten gewesen wäre.

Gegenstand der vorliegenden Erfindung sind demnach Zusammensetzungen enthaltend mindestens ein Lösemittel und mindestens eine Verbindung der Formel (I-A) oder (I-B) in gelöster Form.

Gegenstand der vorliegenden Erfindung sind ebenfalls Verfahren zur Herstellung von wasserlöslichen Konzentraten enthaltend mindestens eine Verbindung der Formel (I-A) oder (I-B).

Gegenstand der vorliegenden Erfindung ist außerdem die Verwendung von Zusammensetzungen enthaltend ein Phase enthaltend mindestens eine Verbindung der Formel (I-A) oder (I-B) in gelöster Form zur Bekämpfung von unerwünschtem Pflanzenwuchs.

Im Allgemeinen sind alle oben aufgeführten Verbindungen der Formeln (I-A) oder (I-B) erfindungsgemäß einsetzbar.

Erfindungsgemäß bevorzugte Verbindungen der Formel (I-A) sind in Tabelle 1 aufgezeigt, wobei jede dort enthaltene Verbindung für sich bevorzugt ist.

Erfindungsgemäß bevorzugte Verbindungen der Formel (I-B) sind in Tabelle 2 aufgezeigt, wobei jede dort enthaltene Verbindung für sich bevorzugt ist.

**Tabelle 1**

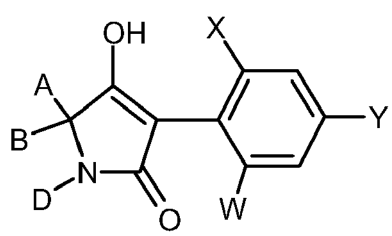

(I-A)

| Bsp.-Nr | X | W | Y | D | A | B | Fp / ˚C bzw. NMR-Daten | Isomer |
|---|---|---|---|---|---|---|---|---|
| A.1 | $OCH_3$ | $C_2H_5$ | Cl | $-(CH_2)_3-$ | | H | Zers. | - |
| A.2 | $OCH_3$ | $C_2H_5$ | Cl | H | 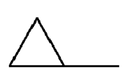 | $CH_3$ | 3,67 ppm (s, 3H, Ar-O-CH3), 1,37 (s, 3 H, CH3 (C5)) | |
| A.3 | $OC_2H_5$ | $C_2H_5$ | Cl | H | $-(CH_2-)_2-CH(OCH_3)-(CH_2)_2-$ | | 96 | cis |
| A.4 | $OCH_3$ | $C_2H_5$ | Cl | H | $-(CH_2-)_2-CH(OCH_3)-(CH_2)_2-$ | | 223 | cis |
| A.5 | $OCH_3$ | $C_2H_5$ | Cl | H | $-(CH_2-)_2-O-(CH_2)_2-$ | | 263 | |

(fortgesetzt)

| Bsp.-Nr | X | W | Y | D | A | B | Fp / ˚C bzw. NMR-Daten | Isomer |
|---|---|---|---|---|---|---|---|---|
| A.6 | $OCH_3$ | $C_2H_5$ | Cl | H | $CH_3$ | $CH_3$ | 141 | - |

**Tabelle 2**

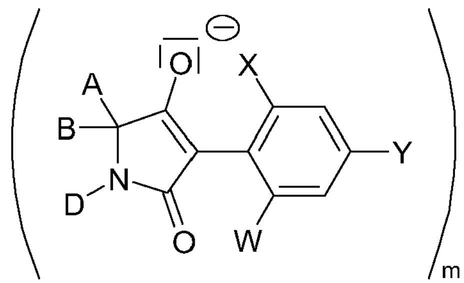

$G^{(+)n}$

(I-B)

| Bsp. Nr. | W | X | Y | D | A | B | $G^{(+)}n$ | m | Fp. / ˚C bzw. NMR-Daten | Isomer |
|---|---|---|---|---|---|---|---|---|---|---|
| B.1 | $C_2H_5$ | $OCH_3$ | Cl | $-(CH_2)_3-$ | | H | $Na^+$ | 1 | * 3.93 (m, 1 H, 6.92 und 6.97 (d, je 1H, Ar-H) ppm | |
| B.2 | $C_2H_5$ | $OCH_3$ | Cl | $-(CH_2)_3-$ | | H | $Li^+$ | 1 | *3.95 (m, 1H, C(5)H-N), 6.93 und -6.99 (d, je 1H, Ar-H) | - |
| B.3 | $C_2H_5$ | $OCH_3$ | Cl | $-(CH_2)_3-$ | | H | $K^+$ | 1 | *3.96 (m, 1H, C(5)H-N), 6.93 und -6.99 (d, je 1 H, Ar-H) | - |
| B.4 | $C_2H_5$ | $OCH_3$ | Cl | H | 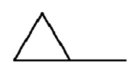 | $CH_3$ | $Na^+$ | 1 | *1.13 (m, 1H, CH-cycPr), 6.95 und -7.00 (d, je 1H, Ar-H) | - |
| B.5 | $C_2H_5$ | $OCH_3$ | Cl | H | 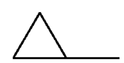 | $CH_3$ | $K^+$ | 1 | *1.13 (m, 1H, CH-cycPr), 6.93 und -7.00 (d, je 1H, Ar-H) | - |
| B.6 | $C_2H_5$ | $OC_2H_5$ | Cl | H | $-(CH_2)_2-CH(OCH_3)-(CH_2)_2-$ | | Na+ | 1 | **0.97 und 1.15 (je t, je 3H); 3.81 (mc, 2H), 6.62 und 6.68 (je mc, je 1H) | cis |
| B.7 | $C_2H_5$ | $OCH_3$ | Cl | H | $-(CH_2)_2-CH(OCH_3)-(CH_2)_2-$ | | Na+ | 1 | **0.95 (t, 3H), 3.58 (s, 3H), 6.64 und 6.68 (je mc, je 1H) | cis |
| B.8 | $C_2H_5$ | $OCH_3$ | Cl | H | $-(CH_2)_2-O-(CH_2)_2-$ | | Na+ | 1 | 88 | - |
| B.9 | $C_2H_5$ | $OCH_3$ | Cl | H | $CH_3$ | $CH_3$ | Na+ | 1 | ** 0.97 (t, 3H), 1.05 (s, 6H), 6.65 und -6.69 (je mc, je 1H) | - |

(fortgesetzt)

| Bsp. Nr. | W | X | Y | D | A | B | $G^{(+)}n$ | m | Fp. / ˚C bzw. NMR-Daten | Isomer |
|---|---|---|---|---|---|---|---|---|---|---|
| B.10 | $C_2H_5$ | $OC_2H_5$ | Cl | H | $-(CH_2)_2-CH(OCH_3)-(CH_2)_2-$ | | $K^+$ | 1 | **0.98 (t, 3H), 1.15 (t, 3H), 3.02, mc, 1H), 6.61 und 6.67 (je mc, je 1H) | cis |
| B.11 | $C_2H_5$ | $OCH_3$ | Cl | H | $-(CH_2)_2-CH(OCH_3)-(CH_2)_2-$ | | $K^+$ | 1 | **0.94 (t, 3H), 1.15-1.43 (m, 4H), 1.62 (m, 2H, 1.88 (mc, 2H), 6.65 und 6.67 (je mc, je 1H) | cis |
| B.12 | $C_2H_5$ | $OCH_3$ | Cl | H | $-(CH_2)_2-O-(CH_2)_2-$ | | $K^+$ | 1 | **0.99, (t, 3H, $CH_2-CH_3$) 1.05-1.13 (m, 2H, $CH_2-CH_2-O$) 1.87-1.95 (zm, 2H, $-CH_2-CH_2-O$) 3.59 (s, 3H, $OCH_3$) 6.64, 6.68 (2 d , 2H, Ar-H) | - |
| B.13 | $C_2H_5$ | $OCH_3$ | Cl | H | $CH_3$ | $CH_3$ | $K^+$ | 1 | **1.04 und 1.05 (je s, je 3H), 6.64 und -6.68 (je mc, je 1H) | - |
| B.14 | $C_2H_5$ | $OC_2H_5$ | Cl | H | $-(CH_2)_2-CH(OCH_3)-(CH_2)_2-$ | | $Li^+$ | 1 | **0.97 (t, 3H), 1.16 (t, 3H), 1.66 und 1.89 (je mc, je 2H), 6.63 und 6.68 (je mc, je 1H) | cis |
| B.15 | $C_2H_5$ | $OCH_3$ | Cl | H | $-(CH_2)_2-CH(OCH_3)-(CH_2)_2-$ | | $Li^+$ | 1 | ** 0.96 (t, 3H), 3.15 (mc, 3H), 3.56 (mc, 3H), 4.10 (mc, 1H); 6.65 und 6.69 (je mc, je 1H) | cis |
| B.16 | $C_2H_5$ | $OCH_3$ | Cl | H | $-(CH_2)_2-O-(CH_2)_2-$ | | $Li^+$ | 1 | 342 | - |
| B.17 | $C_2H_5$ | $OCH_3$ | Cl | H | $CH_3$ | $CH_3$ | $Li^+$ | 1 | **0.97 (t, 3H), 1.05 (s, 6H), 2.38-2.57 (m, 2H), 6.66 und 6.69 (je mc, je 1H) | - |

* $^1H$-NMR (300 MHz, $D_2O$): Verschiebungen δ in ppm
** $^1H$-NMR (400 MHz, DMSO-d6): Verschiebungen δ in ppm

Es wurde außerdem gefunden (siehe Beispiele A und B), dass sich die Wirkung von Zusammensetzungen enthaltend eine Phase enthaltend mindestens eine Verbindung der Formeln (I-A) oder (I-B) in gelöster Form durch die Zugabe von bestimmten Tensiden steigern lässt.

Als Tenside eignen sich beispielsweise Sulfate, Sulfonate, Phosphate und Phosponate von Kohlenwasserstoffen, die optional Alkylenoxideinheiten enthalten können. Die Sulfate, Sulfonate, Phosphate und Phosponate können in Form der Säuren oder als Salze vorliegen. Bevorzugt sind anionische Tenside der nachfolgenden Formel (II):

R-Q (II)

worin

Q -O- $SO_3$ M, -$SO_3$ M, -O-$PO_3$H M oder -$PO_3$H M ist,

worin M gleich H oder ein Kation ist, insbesondere ein Metallkation wie ein Alkalimetallion oder Erdalkalimetallion, oder ein Ammoniumion,

R ein unsubstituierter oder substituierter $C_1$-$C_{30}$-Kohlenwasserstoffrest ist, der optional über Alkylenoxideinheiten gebunden sein kann, oder R eine Alkylenoxideinheit ist.

Unter dem Begriff Alkylenoxideinheiten werden insbesondere Einheiten von $C_2$-$C_{10}$-Alkylenoxiden, wie Ethylenoxid, Propylenoxid oder Butylenoxid verstanden, wobei die Einheiten innerhalb des Tensids gleich oder voneinander verschieden und dabei statistisch gemischt oder blockweise angeordnet sein können.

Bevorzugt ist R ein $C_1$-$C_{20}$-Alkylrest (z.B. Methyl, Ethyl, Propyl, Butyl) oder ein $C_6$-$C_{24}$-Arylrest (z.B. Phenyl, Biphenyl, Naphthyl), der optional einen oder mehrere Reste tragen kann, z.B. aus der Gruppe $C_1$-$C_{20}$-Alkyl (z.B. lineares oder verzweigtes $C_1$-$C_{20}$-Alkyl wie sec. Butyl oder Dodecyl), welches einen oder mehrere Reste wie $C_6$-$C_{20}$-Arylreste (z.B. Phenyl, Biphenyl, Naphthyl) tragen kann, und $C_6$-$C_{20}$-Aryl (z.B. Phenyl, Biphenyl oder Naphthyl), welches optional einen oder mehrere Reste tragen kann wie $C_1$-$C_{10}$-Alkyl (z.B. Methyl, Ethyl, Propyl, Butyl), oder

R ist ein Rest $R^1O$-$(AO)_w$, worin w eine ganze Zahl von 1 bis 100 ist, und AO eine Alkylenoxideinheit ist, z.B. $(EO)_x(PO)y(BO)_z$, worin EO eine Ethylenoxideinheit, PO eine Propylenoxideinheit, BO eine Butylenoxideinheit, x eine ganze Zahl von 0 - 100, y eine ganze Zahl von 0 - 100, z eine ganze Zahl von 0 bis 100 und die Summe x + y + z mindestens 1 ist, und die Alkylenoxideinheit, z.B. $(EO)_X(PO)_Y(BO)_Z$, statistisch gemischt oder blockweise aufgebaut sein kann, und

$R^1$ ist H, ein $C_1$-$C_{20}$-Alkylrest (z.B. Methyl, Ethyl, Propyl, Butyl) oder ein $C_6$-$C_{24}$-Arylrest (z.B. Phenyl, Biphenyl, Naphthyl), der optional einen oder mehrere Reste tragen kann, z.B. aus der Gruppe $C_1$-$C_{20}$-Alkyl (z.B. lineares oder verzweigtes $C_1$-$C_{20}$-Alkyl wie sec. Butyl oder Dodecyl), welches einen oder mehrere Reste wie $C_6$-$C_{20}$-Arylreste (z.B. Phenyl, Biphenyl, Naphthyl) tragen kann, und $C_6$-$C_{20}$-Aryl (z.B. Phenyl, Biphenyl, Naphthyl), welches optional einen oder mehrere Reste tragen kann wie $C_1$-$C_{10}$-Alkyl (z.B. Methyl, Ethyl, Propyl, Butyl), oder $R_2$ ist -O-$SO_3$ M, -$SO_3$ M, -O-$PO_3$H M, H oder -$PO_3$H M, vorzugsweise $PO_3$H M, worin M gleich H oder ein Kation, insbesondere ein Metallkation wie ein Alkalimetallion oder Erdalkalimetallion, oder ein Ammoniumion ist.

Besonders bevorzugte Tenside sind Alkylarylsulfonate wie Dodecylbenzolsulfonate, z.B. Erdalkalidodecylbenzolsulfonate wie Calcium-dodecylbenzolsulfonate (z.B. Phenylsulfonat® Ca100 von Clariant), Alkylarylpolyglykolethersulfate und -sulfonate, insbesondere Arylalkylarylpolyglykolethersulfate wie Tristyrylphenolpolyglykolethersulfate, insbesondere die Alkali- oder Ammonium- oder Triethanolaminsalze (z.B. Soprophore®-Reihe von Rhodia), Alkylethersulfate und deren Salze (z.B. wie Genapol® LRO von Clariant), Alkylsulfate und Alkylsulfonate (z.B. wie die Hostapur® Reihe von Clariant), Alkylpolyglykoletherphosphate, insbesondere die Alkalisalze (z.B. die Rhodafac®-Reihe Rhodia), Alkylarylpolyglykoletherphosphate, insbesondere in Form der Alkalimetallsalze. Die Salze sind im allgemeinen bevorzugt Metallsalze wie Alkali- oder Erdalkalimetallsalze oder Ammonium- oder Trialkylaminsalze.

Ganz besonders bevorzugt sind Alkylethersulfate und deren Salze (z.B. wie Genapol® LRO von Clariant).

Als Tensid kommen beispielsweise ebenfalls Alkanol-alkoxylate in Betracht. Erfindungsgemäße Tenside sind Alkanol-alkoxylate der Formel (III)

$R^2$-O-$(-AO)_m$-H (III)

in welcher

$R^2$ für geradkettiges oder verzweigtes Alkyl mit 4 bis 20 Kohlenstoffatomen steht,

AO für einen Ethylenoxid-Rest, einen Propylenoxid-Rest, einen Butylenoxid-Rest oder für Gemische aus Ethylenoxid-

und Propylenoxid-Resten oder Butylenoxid-Resten steht und

m für Zahlen von 2 bis 20 steht.

Eine bevorzugte Gruppe von Tensiden sind Alkanol-alkoxylate der Formel (III-a)

$$R^2\text{-O-(-EO-)}_b\text{-H} \qquad \text{(III-a)}$$

in welcher

$R^2$ für verzweigtes Alkyl mit 8 bis 15 Kohlenstoffatomen steht,

EO für $-CH_2-CH_2-O-$ steht und

b für Zahlen von 4 bis 18 steht.

Ebenfalls geeignete Tenside sind kationische Tenside, die sich von primären Fettalkoholaminen ableiten. Diese können z.B. durch die Formel (IV) dargestellt werden:

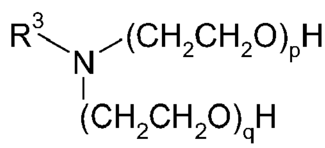

(IV)

in welcher

$R^3$ für geradkettiges oder verzweigtes Alkyl mit 14 bis 20 Kohlenstoffatomen steht und die Summe aus p und q 15 bis 25 beträgt.

Die oben genannten Tenside können als Mischung unterschiedlicher Substanzen vorliegen, die unter die allgemeinen Formeln (II), (III) und (IV) fallen. Insbesondere sind die für m, b, p und q angegebenen Werte Durchschnittswerte.

Besonders bevorzugte Tenside sind solche der Formel (II).

Gegenstand der vorliegenden Erfindung sind demnach auch Zusammensetzungen, enthaltend neben mindestens einer Phase enthaltend mindestens eine Verbindung der Formeln (I-A) oder (I-B) in gelöster Form und mindestens ein Tensid ausgewählt aus den Tensiden der Formeln (II), (III) und (IV).

Als Lösemittel in den erfindungsgemäßen Zusammensetzungen lassen sich alle üblicherweise in agrochemischen Formulierungen genannten, wassermischbaren Lösemittel einsetzen, in denen die Wirkstoffe der Formeln (I-A) und (I-B) in den hier verwendeten Konzentrationen lösen. Als Beispiele genannt seien Wasser, Alkohole wie Methanol, Ethanol oder Isopropanol, Ether bzw. Polyether wie 1,4-Dioxan, Tetrahydrofuran oder Dimethoxyethan, Amide wie Formamid, Acetamid, N,N-Dimethylformamid , N,N-Dimethylacetamid oder Hallcomid® (Mischung aus 50 - 60 % N,N-Dimethyloctanamid und 35 - 45 % N,N-Dimethyldecanamid), Sulfoxide/Sulfone wie Dimethylsulfoxid oder Sulfolan und Laktone/Laktame wie N-Methylpyrrolidon und gamma-Butyrolakton.

Bevorzugt als Lösemittel ist Wasser.

Optional enthalten die erfindungsgemäßen Formulierungen weitere Zusatzstoffe aus den Gruppen der schaumhemmenden Mittel, der Antioxydantien und/oder der Farbstoffe.

Als schaumhemmende Stoffe kommen alle üblicherweise für diesen Zweck in agrochemischen Mitteln einsetzbaren Substanzen in Betracht. Bevorzugt sind Polydimethylsiloxane, Silikonöle und Magnesiumstearat.

Als Antioxydantien kommen alle üblicherweise für diesen Zweck in agrochemischen Mitteln einsetzbaren Substanzen in Betracht. Bevorzugt ist Butylhydroxytoluol (2,6-di-t-butyl-4-methylphenol, BHT).

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

In den erfindungsgemäßen Formulierungen beträgt der Gehalt an Wirkstoff im Allgemeinen 0,1 bis 50 Gew.-%, bevorzugt 1 bis 25 Gew.-%, besonders bevorzugt 2 bis 20 Gew.-%.

In den erfindungsgemäßen Formulierungen beträgt der Gehalt an Tensid (Wirksubstanz, evtl. korrigiert um

Wassergehalt) im Allgemeinen 5 bis 50 Gew.-% und bevorzugt 10 bis 30 Gew.-%.

In anwendungsfertigen Formulierungen (Spritzbrühen) beträgt der Gehalt an Tensid im Allgemeinen 0,1 bis 10 g/l, bevorzugt 0,3 bis 3 g/l.

Das Tensid wird im Allgemeinen in einer Aufwandmenge von 20 bis 1000 g a.i. / ha, bevorzugt 100 bis 300 g a.i. / ha ausgebracht.

Erfindungsgemäße Zusammensetzungen können außerdem neben mindestens einer Verbindung der Formel (I-A) oder (I-B) mindestens einen weiteren herbiziden Wirkstoff enthalten, bevorzugt aus der Gruppe bestehend aus Acetochlor, Acifluorfen (-sodium), Aclonifen, Alachlor, Alloxydim (-sodium), Ametryne, Amicarbazone, Amidochlor, Amidosulfuron, Aminopyralid, Anilofos, Asulam, Atrazine, Azafenidin, Azimsulfuron, Beflubutamid, Benazolin (-ethyl), Benfuresate, Bensulfuron (-methyl), Bentazon, Bencarbazone, Benzfendizone, Benzobicyclon, Benzofenap, Benzoylprop (-ethyl), Bialaphos, Bifenox, Bispyribac (-sodium), Bromobutide, Bromofenoxim, Bromoxynil, Butachlor, Butafenacil (-allyl), Butroxydim, Butylate, Cafenstrole, Caloxydim, Carbetamide, Carfentrazone (-ethyl), Chlomethoxyfen, Chloramben, Chloridazon, Chlorimuron (-ethyl), Chlornitrofen, Chlorsulfuron, Chlortoluron, Cinidon (-ethyl), Cinmethylin, Cinosulfuron, Clefoxydim, Clethodim, Clodinafop (-propargyl), Clomazone, Clomeprop, Clopyralid, Clopyrasulfuron (-methyl), Cloransulam (-methyl), Cumyluron, Cyanazine, Cybutryne, Cycloate, Cyclosulfamuron, Cycloxydim, Cyhalofop (-butyl), 2,4-D, 2,4-DB, Desmedipham, Diallate, Dicamba, Dichlorprop (-P), Diclofop (-methyl), Diclosulam, Diethatyl (-ethyl), Difenzoquat, Diflufenican, Diflufenzopyr, Dimefuron, Dimepiperate, Dimethachlor, Dimethametryn, Dimethenamid, Dimexyflam, Dinitramine, Diphenamid, Diquat, Dithiopyr, Diuron, Dymron, Epropodan, EPTC, Esprocarb, Ethalfluralin, Ethametsulfuron (-methyl), Ethofumesate, Ethoxyfen, Ethoxysulfuron, Etobenzanid, Fenoxaprop (-P-ethyl), Fentrazamide, Flamprop (-isopropyl, -isopropyl-L, -methyl), Flazasulfuron, Florasulam, Fluazifop (-P-butyl), Fluazolate, Flucarbazone (-sodium), Flufenacet, Flumetsulam, Flumiclorac (-pentyl), Flumioxazin, Flumipropyn, Flumetsulam, Fluometuron, Fluorochloridone, Fluoroglycofen (-ethyl), Flupoxam, Flupropacil, Flurpyrsulfuron (-methyl, -sodium), Flurenol (-butyl), Fluridone, Fluroxypyr (-butoxypropyl, -meptyl), Flurprimidol, Flurtamone, Fluthiacet (-methyl), Fluthiamide, Fomesafen, Foramsulfuron, Glufosinate (-ammonium), Glyphosate (-isopropylammonium), Halosafen, Haloxyfop (-ethoxyethyl, -P-methyl), Hexazinone, HOK-201, Imazamethabenz -methyl), Imazamethapyr, Imazamox, Imazapic, Imazapyr, Imazaquin, Imazethapyr, Imazosulfuron, Iodosulfuron (-methyl, - sodium), Ioxynil, Isopropalin, Isoproturon, Isouron, Isoxaben, Isoxachlortole, Isoxaflutole, Isoxapyrifop, Lactofen, Lenacil, Linuron, MCPA, Mecoprop, Mefenacet, Mesosulfurone, Mesotrione, Metamifop, Metamitron, Metazachlor, Methabenzthiazuron, Metobenzuron, Metobromuron, (alpha-) Metolachlor, Metosulam, Metoxuron, Metribuzin, Metsulfuron (-methyl), Molinate, Monolinuron, Naproanilide, Napropamide, Neburon, Nicosulfuron, Norflurazon, Orbencarb, Orthosulfamuron, Oryzalin, Oxadiargyl, Oxadiazon, Oxasulfuron, Oxaziclomefone, Oxyfluorfen, Paraquat, Pelargonsäure, Pendimethalin, Pendralin, Penoxsulam, Pentoxazone, Phenmedipham, Picolinafen, Pinoxaden, Piperophos, Pretilachlor, Primisulfuron (-methyl), Profluazol, Prometryn, Propachlor, Propanil, Propaquizafop, Propisochlor, Propoxycarbazone (-sodium), Propyzamide, Prosulfocarb, Prosulfuron, Pyraflufen (-ethyl), Pyrasulfotole, Pyrazogyl, Pyrazolate, Pyrazosulfuron (-ethyl), Pyrazoxyfen, Pyribenzoxim, Pyributicarb, Pyridate, Pyridatol, Pyriftalid, Pyriminobac (-methyl), Pyrimisulfan, Pyrithiobac (-sodium), Pyroxasulfone, Pyroxsulam, Quinchlorac, Quinmerac, Quinoclamine, Quizalofop (-P-ethyl, -P-tefuryl), Rimsulfuron, Sethoxydim, Simazine, Simetryn, Sulcotrione, Sulfentrazone, Sulfometuron (-methyl), Sulfosate, Sulfosulfuron, Tebutam, Tebuthiuron, Tembotrione, Tepraloxydim, Terbuthylazine, Terbutryn, Thenylchlor, Thiafluamide, Thiazopyr, Thidiazimin, Thifensulfuron (-methyl), Thiobencarb, Tiocarbazil, Topramezone, Tralkoxydim, Triallate, Triasulfuron, Tribenuron (-methyl), Triclopyr, Tridiphane, Trifluralin, Trifloxysulfuron, Triflusulfuron (-methyl), Tritosulfuron und den folgenden drei Verbindungen

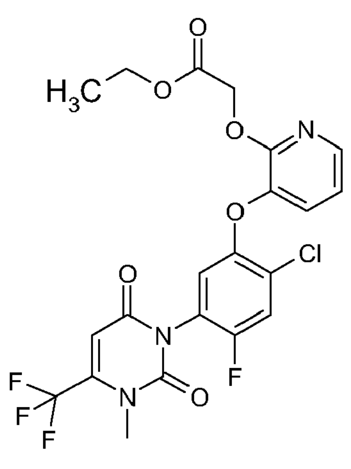

,

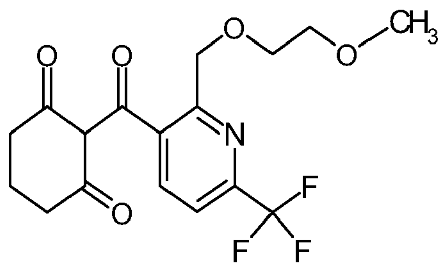

und

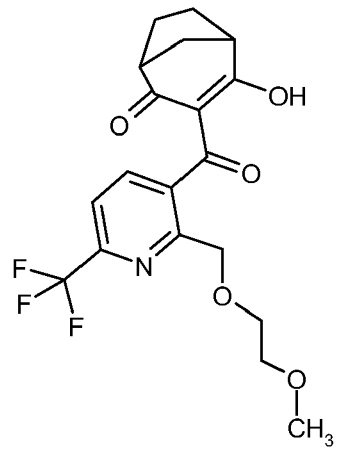

.

Erfindungsgemäße Zusammensetzungen können außerdem Herbizid-Safener enthalten. Beispiele für solche Safener sind z.B. Verbindungen der Formel (V) sind in der nachstehenden Tabelle aufgeführt.

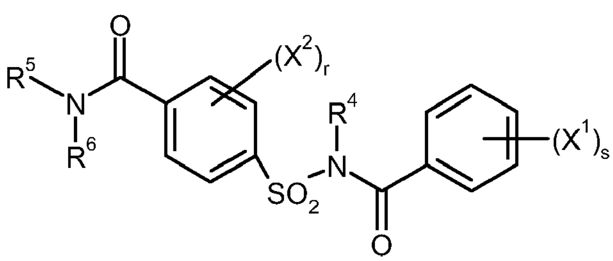

(V)

<u>**Tabelle**</u> Beispiele für die Verbindungen der Formel (IIe)

| Beispiel-Nr. | $R^4$ | $R^5$ | $R^6$ | (Positionen) $(X^1)_s$ | (Positionen) $(X^2)_r$ |
|---|---|---|---|---|---|
| V-1 | H | H | $CH_3$ | (2) $OCH_3$ | - |
| V-2 | H | H | $C_2H_5$ | (2) $OCH_3$ | - |
| V-3 | H | H | $C_3H_7$-n | (2) $OCH_3$ | - |
| V-4 | H | H | $C_3H_7$-i | (2) $OCH_3$ | - |
| V-5 | H | H | 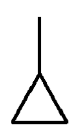 | (2) $OCH_3$ | - |
| V-6 | H | $CH_3$ | $CH_3$ | (2) $OCH_3$ | - |
| V-7 | H | H | $CH_3$ | (2) $OCH_3$ (5) $CH_3$ | - |
| V-8 | H | H | $C_2H_5$ | (2) $OCH_3$ (5) $CH_3$ | - |
| V-9 | H | H | $C_3H_7$-n | (2) $OCH_3$ (5) $CH_3$ | - |
| V-10 | H | H | $C_3H_7$-i | (2) $OCH_3$ (5) $CH_3$ | - |

(fortgesetzt)

| Beispiel-Nr. | $R^4$ | $R^5$ | $R^6$ | (Positionen) $(X^1)_s$ | (Positionen) $(X^2)_r$ |
|---|---|---|---|---|---|
| V-11 | H | H | 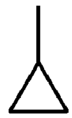 | (2) $OCH_3$ (5) $CH_3$ | - |
| V-12 | H | $CH_3$ | $CH_3$ | (2) $OCH_3$ (5) $CH_3$ | - |

Weitere Beispiele sind Cloquintocet-mexyl, Fenchlorazol-ethyl, Isoxadifen-ethyl, Mefenpyr-diethyl, Furilazole, Fenclorim, Cumyluron, Dymron und Dimepiperate.

Bevorzugt als Safener ist Mefenpyr-diethyl

Bevorzugt sind erfindungsgemäß Zusammensetzungen enthaltend als herbizide Wirkstoffe

- A.3 und Glyphosat
- A.3 und Glufosinat
- A.3 und Fenoxaprop-P-ethyl.

Bevorzugte erfindungsgemäße Zusammensetzungen sind auch solche enthaltend mindestens eine Verbindung der Formeln (I-A) oder (I-B), Fenoxaprop-P-Ethyl und Mefenpyr-Diethyl.

Besonders bevorzugte erfindungsgemäße Zusammensetzungen sind auch solche enthaltend

- mindestens eine Verbindung ausgewählt aus A.2, A.3, B.4 und B.6 sowie
- Fenoxaprop-P-Ethyl und Mefenpyr-Diethyl.

Wenn der zusätzlich vorhandene herbizide Wirkstoff in dem für den Wirkstoff der Formel (I-A) oder (I-B) verwendeten Lösemittel in den benötigten Konzentrationen löslich ist, können alle Wirkstoffe in einer Phase gelöst sein. Die erfindungsgemäßen Konzentrate sind dann (z.B. Wasser-basierte) lösliche Konzentrate.

Gegenstand der Erfindung sind demnach bevorzugt Zusammensetzungen enthaltend

- eine Phase enthaltend mindestens einen gelösten Wirkstoff der Formeln (I-A) und (I-B) und einen weiteren Wirkstoff ausgesucht aus Glyphosat und Glufosinat,
- optional weitere Zusatzstoffe aus den Gruppen der schaumhemmenden Mittel, der Antioxydantien und/oder der Farbstoffe und
- mindestens ein Lösemittel.
  Ist der weitere herbizide Wirkstoff (wie z.B. Fenoxaprop-P-Ethyl) nicht in den für (I-A) oder (I-B) benutzten Lösemitteln löslich, so kann der weitere Wirkstoff in einem anderen, geeigneten Lösemittel gelöst werden. Die beiden Phasen können dann gemischt werden und es resultiert z.B. eine EW-Formulierung (Emulsion in Wasser).
  Gegenstand der Erfindung sind demnach Zusammensetzungen enthaltend
- eine Phase enthaltend mindestens einen gelösten Wirkstoff der Formeln (I-A) und (I-B),
- eine weitere Phase enthaltend mindestens einen weiteren gelösten oder partikulären Wirkstoff,
- optional weitere Zusatzstoffe aus den Gruppen der Emulgatoren, schaumhemmenden Mittel, der Antioxydantien und/oder der Farbstoffe.

Bevorzugt sind demnach Zusammensetzungen enthaltend

- eine Phase enthaltend mindestens einen gelösten Wirkstoff der Formeln (I-A) und (I-B),
- eine weitere Phase enthaltend Fenoxaprop-P-ethyl,
- optional weitere Zusatzstoffe aus den Gruppen der Emulgatoren, schaumhemmenden Mittel, der Antioxydantien und/oder der Farbstoffe.

Besonders bevorzugt sind demnach Zusammensetzungen enthaltend

- eine Phase enthaltend mindestens einen gelösten Wirkstoff ausgewählt aus A.2, A.3, B.4 und B.6,
- eine weitere Phase enthaltend Fenoxaprop-P-ethyl und Mefenpyr-Diethyl,
- optional weitere Zusatzstoffe aus den Gruppen der Emulgatoren, schaumhemmenden Mittel, der Antioxydantien und/oder der Farbstoffe.

Als Emulgatoren kommen alle üblichen nichtionogenen, anionischen, kationischen und zwitterionischen Stoffe mit oberflächenaktiven Eigenschaften in Frage, die üblicherweise in agrochemischen Mitteln eingesetzt werden. Zu diesen Stoffen gehören Umsetzungsprodukte von Fettsäuren, Fettsäureestern, Fettalkoholen, Fettaminen, Alkylphenolen oder Alkylarylphenolen mit Ethylenoxid und/oder Propylenoxid und/oder Butylenoxid, sowie deren Schwefelsäureester, Phosphorsäure-mono-ester und Phosphorsäure-di-ester, ferner Umsetzungsprodukte von Ethylenoxid mit Propylenoxid, weiterhin Alkylsulfonate, Alkylsulfate, Arylsulfate, Tetra-alkylammoniumhalogenide, Trialkylaryl-ammoniumhalogenide und Alkylamin-sulfonate. Die Emulgatoren können einzeln oder auch in Mischung eingesetzt werden. Vorzugsweise genannt seien Umsetzungsprodukte von Rizinusöl mit Ethylenoxid im Molverhältnis 1:20 bis 1:60, Umsetzungsprodukte von C6-C20-Alkoholen mit Ethylenoxid im Molverhältnis 1:5 bis 1:50, Umsetzungsprodukte von Fettaminen mit Ethylenoxid im Molverhältnis 1:2 bis 1:25, Umsetzungsprodukte von 1 Mol Phenol mit 2 bis 3 Mol Styrol und 10 bis 50 Mol Ethylenoxid, Umsetzungsprodukte von C8-C12-Alkylphenolen mit Ethylenoxid im Molverhältnis 1:5 bis 1:30, Alkylglykoside, C8-C16-Alkylbenzol-sulfonsäuresalze, wie z.B. Calcium-, Monoethanolammonium-, Di-ethanolammonium- und Tri-ethanolammonium-Salze.

Als Beispiele für nicht-ionische Emulgatoren seien die unter den Bezeichnungen Sapogenat T180( = tri-sec-butylphenol ethoxylate, Fa Clariant), Alkamuls OR36 (= castor oil ethoxylate, Fa Rhodia) und Emulsogen TS54 (= Tristyryl phenol ethoxylate, Clariant) bekannten Produkte genannt. Diese Tristyryl-phenol-ethoxylate (Emulsogen TS540) werden bevorzugt in den erfindungsgemäßen Formulierungen eingesetzt. Als Beispiele für anionische Emulgatoren seien das unter der Bezeichnung Baykanol SL (= Kondensationsprodukt von sulfoniertem Ditolylether mit Formaldehyd) im Handel befindliche Produkt der Bayer AG genannt sowie phosphatierte oder sulfatierte Tristyryl-phenol-ethoxylate, wobei Soprophor FLK und Soprophor 4D 384 (Fa. Rhodia) speziell genannt seien.

Die erfindungsgemäßen Zusammensetzungen weisen eine ausgezeichnete herbizide Wirksamkeit gegen ein breites Spektrum wirtschaftlich wichtiger mono- und dikotyler Schadpflanzen auf. Dabei ist es gleichgültig, ob die Substanzen im Vorsaat-, Vorauflauf oder Nachauflaufverfahren ausgebracht werden.

Im einzelnen seien beispielhaft einige Vertreter der mono- und dikotylen Unkrautflora genannt, die durch die erfindungsgemäßen Zusammensetzungen kontrolliert werden können, ohne dass durch die Nennung eine Beschränkung auf bestimmte Arten erfolgen soll.

Auf der Seite der monokotylen Grasarten werden sowohl Ausfallgetreide wie Weizen, Gerste, Roggen und Triticale als auch z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfasst.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., Paphaver rhoeas spp., Centaurea spp. auf der annuellen Seite sowie Convolvulus, Cirsium, Rumex und Artemisia spp. bei den perennierenden Unkräutern.

Werden die erfindungsgemäßen Zusammensetzungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Zusammensetzungen auf die grünen Pflanzenteile im Nachauflaufverfahren tritt ebenfalls

sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Zusammensetzungen zeichnen sich durch eine schnell einsetzende und lang andauernde herbizide Wirkung aus. Die Regenfestigkeit der Wirkstoffe in den erfindungsgemäßen Zusammensetzungen ist in der Regel günstig. Durch die erfindungsgemäßen Zusammensetzungen wird eine erhebliche Reduzierung der nötigen Aufwandmenge der Wirkstoffe ermöglicht.

Die erfindungsgemäßen Zusammensetzungen weisen eine ausgezeichnete herbizide Wirksamkeit gegen ein breites Spektrum wirtschaftlich wichtiger mono- und dikotyler Schadpflanzen auf, einschließlich Arten die resistent sind gegen herbizide Wirkstoffe wie Glyphosate, Glufosinate, Atrazin oder Imidazolinon-Herbizide.

Obgleich die erfindungsgemäßen Zusammensetzungen eine ausgezeichnete herbizide Aktivität gegenüber mono- und dikotylen Schadpflanzen aufweisen, werden die Kulturpflanzen nur unwesentlich oder gar nicht geschädigt.

Darüberhinaus weisen die erfindungsgemäßen Zusammensetzungen teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Des Weiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da Ernteverluste beim Lagern hierdurch verringert oder völlig verhindert werden können.

Aufgrund ihrer herbiziden und pflanzenwachstumsregulatorischen Eigenschaften können die erfindungsgemäßen Zusammensetzungen zur Bekämpfung von Schadpflanzen in gentechnisch veränderten oder durch Mutationsselektion erhaltenen Kulturpflanzen eingesetzt werden. Diese Kulturpflanzen zeichnen sich in der Regel durch besondere vorteilhafte Eigenschaften aus, wie Resistenzen gegenüber herbiziden Mitteln oder Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z.B. das Erntegut hinsichtlich Menge, Qualität, Lagerfähigkeit, Zusammensetzung und spezieller Inhaltsstoffe. So sind z.B. transgene Pflanzen mit erhöhtem Stärkegehalt oder veränderter Qualität der Stärke oder solche mit anderer Fettsäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten (siehe z.B. US 5,162,602; US 4,761,373; US 4,443,971). Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),

- transgene Kulturpflanzen, welche Resistenzen gegen andere Herbizide aufweisen, beispielsweise gegen Sulfonylharnstoffe (EP-A-0257993, US-A-5013659), gegen Glyphosate (Round-up Ready©-Sorten), gegen Glufosinate (LibertyLink©-Sorten) oder gegen Imidazolinone.

- transgene Rapspflanzen, z.B. Imidazolinon-resistente Rapssorten, Roundup Ready© Raps (RR-Raps) oder LibertyLink© Raps (LL-Raps).

- transgene Kulturpflanzen, mit der FähigkeitBacillus thuringiensis-Toxine (Bt-Toxine) zu produzieren, welche die

Pflanzen gegen bestimmte Schädlinge resistent machen (EP-A-0142924, EP-A-0193259).

- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der oben genannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin auch ein Verfahren zur Bekämpfung von unerwünschtem Pflanzenwuchs (z.B. Schadpflanzen), vorzugsweise in Pflanzenkulturen wie Getreide (z.B. Weizen, Gerste, Roggen, Hafer, Kreuzungen davon wie Triticale, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, oder in dikotylen Kulturen, wobei man erfindungsgemäße Zusammensetzungen z.B. im Vorauflauf, Nachauflauf oder im Vor- und Nachauflauf, auf die Pflanzen, z.B. Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein.

Gegenstand der Erfindung ist auch die Verwendung der Zusammensetzungen zur Bekämpfung von Schadpflanzen, vorzugsweise in Pflanzenkulturen.

Die erfindungsgemäßen herbiziden Zusammensetzungen können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen.

## Herstellungsbeispiele

Herstellung von wasserdispergierbaren Pulvern (WP-Formulierungen)

Der Wirkstoff wurde mit Inertmaterial vermischt. Das Pulver wurde gemahlen bis eine durchschnittliche Partikelgröße (d50) von 5 bis 10 μm erreicht war.

Eine typische Zusammensetzung einer WP20-Formulierung war:

| | |
|---|---|
| A.3 | 20 Gew.-% |
| Sipernat® 22S | 10 Gew.-% |
| Baykanol® SL | 10 Gew.-% |
| Galoryl® MT 804 | 4 Gew.-% |
| Kaolin W | 54 Gew.-% |

Herstellung von Suspensionskonzentraten (SC-Formulierungen)

Der Wirkstoff wurde in eine wässrige Lösung eines geeigneten Tensids eingerührt. Die Dispersion wurde fein gemahlen unter Benutzung von Standard-Vorrichtungen bis eine durchschnittliche Teilchengröße von weniger als 5 μm erreicht war. Eine typische Zusammensetzung einer SC150-Formulierung war:

| | |
|---|---|
| A.3 | 150 g/l |
| 1,2-Propylenglykol | 52 g/l |
| Agnique® PG 8105 G | 31 g/l |
| Arkopon® T | 21 g/l |
| Acticide® MBS | 2 g/l |
| Rhodopol® 23 | 2 g/l |
| Wasser | 773 g/l |

Herstellung von wasserlöslichen Konzentraten (SL-Formulierungen)

Die SL-Formulierung wurden durch Einrühren und Lösen des Wirkstoffs in Wasser hergestellt.Die Lösungen enthielten bis zu 4 g/l Wirkstoff der Formel (I-A) oder bis zu 100 g/l Wirkstoff der Formel (I-B). Zusätzlich wurden zur Erhöhung der biologischen Aktivität optional wasserlösliche Tenside bis zu einem Gehalt von 300 g a.i. /1 (a.i. = wirksamer Bestandteil) zugegeben.

Wäßrige Lösungen der Li-,Na- und K-Salze des Wirkstoffes können auch hergestellt werden durch gleichzeitiges Einrühren von Wirkstoff (I-A) und einer mindestens äquimolaren Menge an LiOH, NaOH oder KOH.

Eine typische Zusammensetzung einer SL-Formulierung war:

| | |
|---|---|
| B.6 | 11 g/l |
| Genapol® LRO fluid | 764 g/l (28%-ige Lösung in Wasser) |
| Rhodorsil® 4813 g/l | |
| Wasser | 254 g/l |

Herstellung von Zusammensetzungen enthaltend mehrere herbizide Wirkstoffe

Erfindungsgemäße Zusammensetzungen können neben mindestens einem Wirkstoff der Formeln (I-A) und (I-B) auch weitere herbizide Wirkstoffe enthalten oder weitere Wirkstoffe und Herbizid-Safener. Beispiele für solche Formulierungen sind im Folgenden aufgeführt:

*Mischungsbeispiel 1 (SL-Formulierung)*

| | |
|---|---|
| A.3 | 0,32 % |
| Glyphosat | 13,47 % |
| Genapol® LRO paste | 58,62 % |
| 1-Methoxy-2-Propanol | 9,97 % |
| Rhodorsil® Antifoam | 0,25 % |
| Duasyn-acid blue AE 02 | 0,005 % |
| Wasser | ad 100 % |

*Mischungsbeispiel 2 (SL-Formulierung)*

| | |
|---|---|
| B.6 | 0,74 % |
| Glyphosat | 24,50 % |
| Agnique® PG 8105 | 9,2 % |

| | |
|---|---|
| Tetrahydrofurfurylalkohol | 6,0 % |
| Break-Thru® S 200 | 0,6 % |
| SAG 1572 | 0,05 % |
| D&C Red 33 | 0,003 % |
| Agnique® SLES 270 | 35,15 % |
| Wasser | ad 100 % |

*Mischungsbeispiel 3 (EW-Formulierung)*

| | |
|---|---|
| B.6 | 0,74 % |
| Mefenpyr-diethyl | 7,12 % |
| Fenoxaprop-P-Ethyl | 6,55 % |
| Genapol® X-060 | 15,20 % |
| Glycerin | 9,98 % |
| Dispergator® V 4133 Na-Salz, 20% | 9,48 % |
| Emulsogen® EL 400 | 1,00 % |
| Mergal® K9N | 0,20 % |
| Natriumhydroxid | 0,01 % |
| Wasser | 14,81 % |
| Solvesso® 200 ND | ad 100 % |

Ansetzen von Spritzbrühen

Es wurde eine Wasseraufwandmenge von 300 1/ha vorgelegt. Anschließend wurden das Herbizid und die Zusatzstoffe in der bei dem jeweiligen Beispiel angegebenen Art und Aufwandmenge unter Rühren zugegeben, so dass eine homogene Spritzbrühe entstand. Dabei wurde das Herbizid als wasserdispergierbares Pulver, als Suspensionskonzentrat oder als wasserlsliches Konzentrat eingesetzt.

**Biologische Versuche**

Verwendete Abkürzungen:

| | |
|---|---|
| g a.i./ha = | Gramm Aktivsubstanz/Hektar |
| 1/ha = | Liter/Hektar |
| ALOMY = | Alopecurus myosuroides |
| APESV = | Apera spica venti |
| AVEFA = | Avena fatua |
| BROER = | Bromus erectus |
| LOLMU = | Lolium multiflorum |
| SETLU = | Setaria lutescens |

Allgemeine Methode zur Bestimmung der herbiziden Wirkung

Für die Bestimmung der herbiziden Wirkung wurden Pflanzensamen in einer Tiefe von 1 cm ausgesät und in einer Klimakammer (12 h Licht, Temperatur Tag: 18˚C, Nacht: 14˚C) bis zum Wuchsstadium BBCH 12 bis BBCH13 kultiviert.

Die Pflanzen wurden auf einer Laborspritzbahn mit den entsprechenden Spritzbrühen behandelt. Die Wasseraufwandmenge für die Spritzapplikation betrug 300 1/ha. Nach der Behandlung wurden die Pflanzen wieder in der Klimakammer aufgestellt.

Die Bewertung erfolgt jeweils nach der angegebenen Zeit gemäß einer Skala von 0 bis 100 %:

0 % keine erkennbare Wirkung im Vergleich zu unbehandelten Pflanzen

100 % alle Pflanzen abgetötet.

**Beispiel A**

Es wurden SC-Formulierungen des Wirkstoffs A.3 wie oben angegeben hergestellt und nach Verdünnen in einer Dosis von 10 g/ha eingesetzt. 21 Tage nach der Applikation wurde die Wirksamkeit gegen Unkräuter bewertet. Die Ergebnisse in Tabelle A zeigen deutlich die gute Wirkungssteigerung durch erfindungsgemäße Tenside wie Genapol® LRO, Genapol® X150 und Genamin® T200NF.

**Beispiel B**

Für diesen Versuch wurden Spritzbrühen ausgehend von WP 20-Formulierungen des Wirkstoffs A.3 hergestellt, denen Ammoniumsulfat in einer Aufwandmenge von 500 g/ha zugesetzt wurde. 21 Tage nach der Applikation wurde die Wirksamkeit gegen die Unkräuter bewertet.
Die Auswertungen ergaben die in Tabelle B aufgeführten Resultate, die deutlich die gute Wirksamkeit des Herbizids in Kombination mit Netzmitteln wie Genapol® LRO, Genapol® X150 und Genamin® T200NF zeigen.

Tabelle A

| Tensid | Tensid-Menge [g a.i./ha] | ALOMY | APESV | AVEFA | BROER | LOLMU | Mittelwert |
|---|---|---|---|---|---|---|---|
| Genapol® LRO erfindungsgemäß | 200 g | 80 | 80 | 83 | 70 | 75 | 78 |
| Genapol® X150 erfindungsgemäß | 200 g | 55 | 75 | 50 | 65 | 80 | 65 |
| Genamin® T200NF erfindungsgemäß | 200 g | 70 | 80 | 30 | 70 | 80 | 66 |
| Soprophor® Vergleich | 200 g | 10 | 70 | 10 | 20 | 80 | 38 |
| Alle Wirkungsangaben sind in % | | | | | | | |

Tabelle B

| Tensid | Tensid-Menge [g a.i./ha] | ALOMY | APESV | AVEFA | BROER | LOLMU | SETLU | Mittelwert |
|---|---|---|---|---|---|---|---|---|
| Genapol® LRO erfindungsgemäß | 270 g | 80 | 98 | 85 | 90 | 88 | 100 | 90 |
| Genapol® X150 erfindungsgemäß | 300 g | 75 | 97 | 97 | 95 | 93 | 98 | 93 |
| Genamin® T200NF erfindungsgemäß | 300 g | 25 | 90 | 87 | 65 | 65 | 93 | 71 |
| Silwet® Vergleich | 150 g | 10 | 60 | 55 | 25 | 50 | 45 | 41 |
| *allen Spritzbrühen wurde 500g/ha Ammoniumsulfat zugesetzt<br>Alle Wirkungsangaben sind in % | | | | | | | | |

**Beispiel C**

Die eingesetzten Spritzbrühen wurden aus einer SC-Formulierung mit dem Wirkstoff A.3 bzw. einer SL-Formulierung des korrespondierenden Natrium-Salzes (B.5) analog zu den Herstellungsbeispielen hergestellt. Den Spritzbrühen wurde außerdem 500 g/ha Ammoniumsulfat und 1 1/ha Genapol LRO flüssig zugesetzt.
17 und 31 Tage nach der Applikation wurde die Wirksamkeit gegen die Unkräuter bewertet. Die Ergebnisse in Tabelle C belegen den deutlich früheren Wirkungseintritt und die insgesamt höhere Wirksamkeit von SL Formulierungen gegenüber SC Formulierungen.

**Beispiel D**

Die eingesetzten Spritzbrühen wurden aus einer WP-Formulierung mit dem Wirkstoff A.2 bzw. einer SL-Formulierung des korrespondierenden Natrium-Salzes (B.4) analog zu den Herstellungsbeispielen hergestellt. Den Spritzbrühen wurde außerdem 500 g/ha Ammoniumsulfat und 1 1/ha Genapol LRO flüssig zugesetzt.
21 Tage nach der Applikation wurde die Wirksamkeit bewertet. Die Ergebnisse in Tabelle D belegen die schnellere und bessere Wirksamkeit der SL-Formulierungen im Vergleich zu den WP-Formulierungen.

Tabelle C

| | | ALOMY | | APESV | | LOLMU | |
|---|---|---|---|---|---|---|---|
| Formulierung | Dosis [g a.i./ha] | 17 DAA | 31 DAA | 17 DAA | 31 DAA | 17 DAA | 31 DAA |
| Bsp. A.3 als SC | 5 g | 50 | 20 | 60 | 40 | 70 | 70 |
| Bsp. B.6 als SL | 5 g | 95 | 95 | 85 | 98 | 95 | 99 |
| DAA = Days after application = Tage nach Behandlung | | | | | | | |

Tabelle D

| Formulierung* | Dosis [g a.i./ha] | ALOMY | APESV | AVEFA | BROER | LOLMU | Mittelwert |
|---|---|---|---|---|---|---|---|
| Bsp. A.2 als WP5 | 20 g | 65 | 65 | 80 | 35 | 65 | 62 |
| Bsp. B.4 als SL5 | 20 g | 88 | 85 | 95 | 85 | 88 | 88 |
| *Allen Spritzbrühen wurde je 1 Liter/Hektar Genapol LRO flüssig und 500 g/Hektar Ammoniumsulfat zugesetzt. | | | | | | | |

**Beispiel E**

Die Spritzbrühen wurden aus einer kommerziell erhältlichen Formulierung (SL-Formulierung, Liberty®, Bayer CropScience) durch Zugabe der angegebenen Menge Wirkstoff der Formel (I-A) oder (I-B) hergestellt. Da die Wirkstoffe in der Formulierung löslich sind, handelt es sich bei der resultierenden Mischungsformulierung um eine SL-Formulierung.
Die Wirksamkeit wurde 10 und 21 Tage nach Anwendung beurteilt.

Tabelle E

| Formulierung | Konzentration (g/l) | Dosis [g a.i./ha] | AVEFA | |
|---|---|---|---|---|
| | | | 10 DAA | 21 DAA |
| Liberty®<br>Glufosinate-Ammonium | 150 | 135 | 60 | 50 |
| Liberty® + A.3<br>Glufosinate-Ammonium<br>A.3 | 150<br>2,8 | 135<br>2,5 | 90 | 97 |
| DAA = Days after application = Tage nach Behandlung | | | | |

**Beispiel F**

Die Spritzbrühen wurden aus einer kommerziell erhältlichen Formulierung (EW-Formulierung, Puma@, Bayer CropScience) durch Verdünnen auf die gewünschte Konzentration und anschliessende Zugabe der angegebenen Menge Wirkstoff der Formel (I-A) oder (I-B) hergestellt (Tank-Mix-Verfahren).
Die Wirksamkeit wurde 33 Tage nach Anwendung beurteilt.

Tabelle F

| Formulierung | Dosis [g a.i./ha] | AVEFA | BROER |
|---|---|---|---|
| Puma@<br>Fenoxyprop-P-Ethyl | <br>45 | <br>75 | <br>30 |
| Puma@ + A.3<br>Fenoxyprop-P-Ethyl<br>A.3 | <br>45<br>2 | <br>92 | <br>83 |
| Puma@<br>Fenoxyprop-P-Ethyl | <br>90 | | <br>50 |
| Puma@ + A.3<br>Fenoxyprop-P-Ethyl<br>A.3 | <br>90<br>4 | | <br>94 |

## Patentansprüche

**1.** Zusammensetzung enthaltend

- eine Phase enthaltend mindestens einen gelösten Wirkstoff der Formeln (I- A) und (I- B)

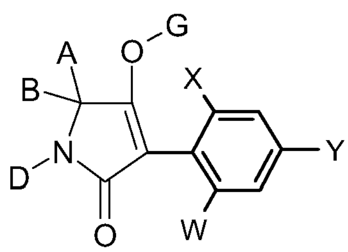

(I-A)

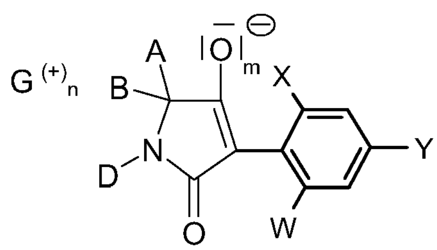

(I-B)

in welchen
X für Methoxy oder Ethoxy steht,
W für Methyl oder Ethyl steht,
Y für Chlor steht,
G für Wasserstoff, Lithium, Natrium, oder Kalium steht,
m für die Zahl 1 steht,
n für die Zahl 1 steht,
A für $C_1$-$C_4$-Alkyl oder Cyclopropyl steht,
B für Methyl steht,
D für Wasserstoff steht
oder
A, B und das Kohlenstoffatom an das sie gebunden sind, gemeinsam für gesättigtes $C_5$-$C_6$-Cycloalkyl, in welchem gegebenenfalls ein Ringglied durch Sauerstoff ersetzt ist und welches gegebenenfalls einfach durch Methyl, Methoxy oder Ethoxy substituiert ist, stehen,

oder
A und D gemeinsam für $C_3$-$C_4$-Alkylidenylgruppe stehen,

- mindestens ein Lösemittel.

**2.** Zusammensetzung gemäß Anspruch 1, enthaltend außerdem mindestens ein Tensid.

**3.** Zusammensetzung gemäß Anspruch 2, enthaltend

- 0,1 bis 50 Gew.-% Wirkstoff der Formel (I-A) und/oder der Formel (I-B)
- 5 bis 50 Gew.-% Tensid
- Wasser

**4.** Zusammensetzung gemäß Anspruch 2 oder 3, **dadurch gekennzeichnet, dass** das Tensid ausgewählt ist aus

- Tensiden der Formel (II):

$$R - Q \qquad (II)$$

worin

Q -O-$SO_3$ M, -$SO_3$ M, -O-$PO_3$H M oder -$PO_3$H M ist,

worin M gleich H oder ein Kation ist, insbesondere ein Metallkation wie ein Alkalimetallion oder Erdalkalimetallion, oder ein Ammoniumion,

R ein unsubstituierter oder substituierter $C_1$-$C_{30}$-Kohlenwasserstoffrest ist, der optional über Alkylenoxideinheiten gebunden sein kann, oder R eine Alkylenoxideinheit ist.
- Alkanol-alkoxylaten der Formel (III)

$$R^2\text{-O-(-AO)}_m\text{-H} \qquad (III)$$

in welcher

$R^2$ für geradkettiges oder verzweigtes Alkyl mit 4 bis 20 Kohlenstoffatomen steht,
AO für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
m für Zahlen von 2 bis 20 steht und

- Fettalkoholaminen der Formel (IV)

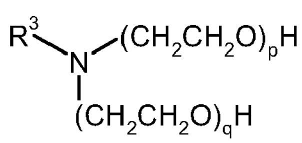

(IV)

in welcher

$R^3$ für geradkettiges oder verzweigtes Alkyl mit 14 bis 20 Kohlenstoffatomen steht und die Summe aus p und q 15 bis 25 beträgt.

**5.** Zusammensetzung gemäß Anspruch 1, enthaltend ein Tensid der Formel (II) gemäß Anspruch 4.

**6.** Zusammensetzung gemäß einem beliebigen der Ansprüche 1 bis 5, enthaltend als Wirkstoffe mindestens eine Verbindung ausgewählt aus

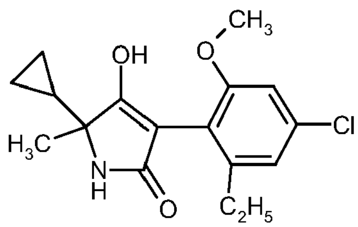

A.2

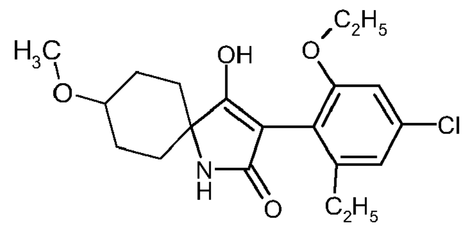

A.3

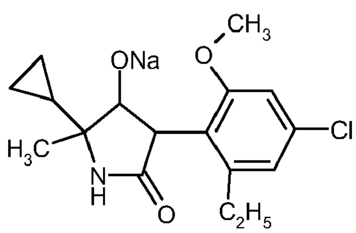

B.4

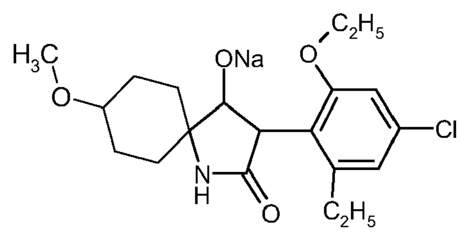

B.6

**7.** Zusammensetzung nach einem beliebigen der Ansprüche 1 bis 6, enthaltend mindestens einen Wirkstoff ausgewählt aus Fenoxyprop-P-Ethyl, Glyphosat und Glufosinat.

**8.** Zusammensetzung nach einem beliebigen der Ansrüche 1 bis 7, enthaltend

- eine Phase enthaltend mindestens einen gelösten Wirkstoff der Formeln (I-A) und (I-B) und einen weiteren Wirkstoff ausgesucht aus Glyphosat und Glufosinat,
- optional weitere Zusatzstoffe aus den Gruppen der schaumhemmenden Mittel, der Antioxydantien und/oder der Farbstoffe und
- mindestens ein Lösemittel.

**9.** Zusammensetzung nach einem beliebigen der Ansrüche 1 bis 8, enthaltend

- eine Phase enthaltend mindestens einen gelösten Wirkstoff der Formeln (I-A) und (I-B),
- eine weitere Phase enthaltend mindestens einen weiteren gelösten oder partikulären Wirkstoff,
- optional weitere Zusatzstoffe aus den Gruppen der Emulgatoren, schaumhemmenden Mittel, der Antioxydantien und/oder der Farbstoffe.

**10.** Verfahren zur Bekämpfung von unerwünschtem Pflanzenwuchs, **dadurch gekennzeichnet, dass** eine herbizid wirksame Menge einer Zusammensetzung gemäß einem beliebigen der Ansprüch 1 bis 9 auf Schadpflanzen und/oder ihren Lebensraum appliziert wird.

**11.** Verwendung eines Tensids ausgewählt aus Tensiden der Formeln (II), (III) oder (IV) gemäß Anspruch 4 zur Steigerung der Wirkung eines Pflanzenschutzmittels enthaltend mindestens einen Wirkstoff der Formeln (I-A) oder (I-B) gemäß Anspruch 1.

**12.** Verwendung gemäß Anspruch 11, **dadurch gekennzeichnet, dass** mindestens ein Tensid einer konzentrierten Formulierung enthaltend mindestens einen Wirkstoff der Formeln (I-A) oder (I-B) gemäß Anspruch 1 zugegeben wird.

**13.** Verwendung gemäß Anspruch 11, **dadurch gekennzeichnet, dass** mindestens ein Tensid einer anwendungsfertigen Formulierung (Spritzbrühe) enthaltend mindestens einen Wirkstoff der Formeln (I-A) oder (I-B) gemäß Anspruch 1 zugegeben wird.

Europäisches Patentamt

# EUROPÄISCHER RECHERCHENBERICHT

Nummer der Anmeldung
EP 07 11 2052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | WO 2004/080962 A (BAYER CROPSCIENCE AG [DE]; FISCHER REINER [DE]; KUNZ KLAUS [DE]; LEHR) 23. September 2004 (2004-09-23) * Seite 57 - Seite 62; Tabellen 1-6 * * Seite 61; Tabellen 3,6 * * Seite 87, Zeile 5 * * Seite 128, Zeile 7 - Zeile 10 * * Seite 128, Zeile 26 - Zeile 28 * * Seite 190 - Seite 207; Beispiele D-M * * Seite 149, Zeile 13 - Zeile 19 * * Seite 139, Zeile 10 - Zeile 14 * * Seite 148, Zeile 3 - Zeile 20 * * Seite 250; Anspruch 35 * * Seite 128, Zeile 9 - Zeile 28 * * Seite 148, Zeile 9 - Zeile 14 * ----- | 1-13 | INV. A01N43/90 A01N43/36 A01N43/38 A01N25/02 |
| Y | DE 35 13 889 A1 (KAO CORP [JP]) 24. Oktober 1985 (1985-10-24) * Seite 3, Zeile 24 - Zeile 32 * * Seite 4, Zeile 20 - Zeile 29 * ----- | 4-13 | |
| | | | RECHERCHIERTE SACHGEBIETE (IPC) |
| Y | US 6 184 182 B1 (GILLESPIE JANE L [US] ET AL) 6. Februar 2001 (2001-02-06) * Spalte 3, Zeile 25 - Zeile 46 * * Spalte 7, Zeile 7 - Zeile 20 * ----- | 4-13 | A01N |
| Y | US 5 389 598 A (BERK HOWARD C [US] ET AL) 14. Februar 1995 (1995-02-14) * Spalte 5, Zeile 35 - Zeile 52 * ----- | 4-13 | |
| D,X | WO 01/89300 A (BAYER AG [DE]; FISCHER REINER [DE]; ERDELEN CHRISTOPH [DE] BAYER CROPS) 29. November 2001 (2001-11-29) * Seite 67; Anspruch 1 * * Seite 30, Zeile 21 - Zeile 24 * * Seite 31, Zeile 13 - Zeile 17 * ----- -/-- | 1-13 | |

Der vorliegende Recherchenbericht wurde für alle Patentansprüche erstellt

| Recherchenort | Abschlußdatum der Recherche | Prüfer |
|---|---|---|
| München | 8. November 2007 | Galley, Carl |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

7

Europäisches Patentamt

# EUROPÄISCHER RECHERCHENBERICHT

Nummer der Anmeldung
EP 07 11 2052

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| D,X | WO 2006/008111 A (BAYER CROPSCIENCE AG [DE]; FISCHER REINER [DE]; RECKMANN UDO [DE]; ROS) 26. Januar 2006 (2006-01-26)<br>* Seite 72; Anspruch 1 *<br>* Seite 58, Zeile 10 - Zeile 13 *<br>* Seite 58, Zeile 28 - Zeile 32 *<br>----- | 1-13 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 8. November 2007 | Galley, Carl |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................
& : Mitglied der gleichen Patentfamilie, übereinstimmendes Dokument

EPO FORM 1503 03.82 (P04C03)

7

**ANHANG ZUM EUROPÄISCHEN RECHERCHENBERICHT ÜBER DIE EUROPÄISCHE PATENTANMELDUNG NR.** EP 07 11 2052

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2007

| Im Recherchenbericht angeführtes Patentdokument | Datum der Veröffentlichung | Mitglied(er) der Patentfamilie | Datum der Veröffentlichung |
|---|---|---|---|
| WO 2004080962 A | 23-09-2004 | AU 2004220445 A1 | 23-09-2004 |
| | | BR PI0408378 A | 21-03-2006 |
| | | CA 2518620 A1 | 23-09-2004 |
| | | CN 1787994 A | 14-06-2006 |
| | | DE 10311300 A1 | 23-09-2004 |
| | | EP 1606254 A1 | 21-12-2005 |
| | | JP 2006520338 T | 07-09-2006 |
| | | KR 20050108385 A | 16-11-2005 |
| | | US 2007015664 A1 | 18-01-2007 |
| DE 3513889 A1 | 24-10-1985 | GB 2157952 A | 06-11-1985 |
| | | JP 1014883 B | 14-03-1989 |
| | | JP 1733609 C | 17-02-1993 |
| | | JP 60224606 A | 09-11-1985 |
| | | US 4976769 A | 11-12-1990 |
| | | US 5043008 A | 27-08-1991 |
| US 6184182 B1 | 06-02-2001 | US 6245713 B1 | 12-06-2001 |
| US 5389598 A | 14-02-1995 | AT 190464 T | 15-04-2000 |
| | | AU 684586 B2 | 18-12-1997 |
| | | AU 1305495 A | 03-07-1995 |
| | | BR 9408319 A | 05-08-1997 |
| | | CA 2177609 A1 | 22-06-1995 |
| | | DE 69423514 D1 | 20-04-2000 |
| | | DE 69423514 T2 | 19-10-2000 |
| | | DK 734207 T3 | 05-06-2000 |
| | | EP 0734207 A1 | 02-10-1996 |
| | | ES 2145258 T3 | 01-07-2000 |
| | | JP 9506621 T | 30-06-1997 |
| | | JP 3117088 B2 | 11-12-2000 |
| | | NZ 277716 A | 22-09-1997 |
| | | WO 9516352 A1 | 22-06-1995 |
| WO 0189300 A | 29-11-2001 | AR 028926 A1 | 28-05-2003 |
| | | AT 301932 T | 15-09-2005 |
| | | AU 6593101 A | 03-12-2001 |
| | | BR 0110979 A | 08-04-2003 |
| | | CA 2409206 A1 | 29-11-2001 |
| | | CN 1443039 A | 17-09-2003 |
| | | DE 10024934 A1 | 22-11-2001 |
| | | EG 22824 A | 30-09-2003 |
| | | EP 1307100 A1 | 07-05-2003 |
| | | ES 2244631 T3 | 16-12-2005 |
| | | JP 2003533544 T | 11-11-2003 |
| | | MX PA02011368 A | 06-09-2004 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 07 11 2052

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2007

| Im Recherchenbericht angeführtes Patentdokument | Datum der Veröffentlichung | Mitglied(er) der Patentfamilie | Datum der Veröffentlichung |
|---|---|---|---|
| WO 0189300 A | | NZ 522615 A | 26-11-2004 |
| | | OA 12265 A | 11-05-2006 |
| | | PL 358792 A1 | 23-08-2004 |
| | | RU 2287931 C2 | 27-11-2006 |
| | | TW 228121 B | 21-02-2005 |
| | | UA 72331 C2 | 15-02-2005 |
| | | US 2003212086 A1 | 13-11-2003 |
| | | ZA 200208564 A | 23-10-2003 |
| WO 2006008111 A | 26-01-2006 | AU 2005263570 A1 | 26-01-2006 |
| | | CA 2574216 A1 | 26-01-2006 |
| | | DE 102004035133 A1 | 16-02-2006 |
| | | EP 1771067 A1 | 11-04-2007 |
| | | KR 20070039145 A | 11-04-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0262399 A
- GB 2266888 A
- EP 355599 A
- EP 415211 A
- JP 12053670 A
- EP 377893 A
- EP 442077 A
- EP 442073 A
- EP 456063 A
- EP 521334 A
- EP 596298 A
- EP 613884 A
- EP 613885 A
- WO 9401997 A
- WO 9526954 A
- WO 9520572 A
- EP 0668267 A
- WO 9625395 A
- WO 9635664 A
- WO 9701535 A
- WO 9702243 A
- WO 9736868 A
- WO 9743275 A
- WO 9805638 A
- WO 9806721 A
- WO 9825928 A
- WO 9924437 A
- WO 9943649 A
- WO 9948869 A
- WO 9955673 A
- WO 0117972 A
- WO 0123354 A
- WO 0174770 A
- WO 03013249 A
- WO 03062244 A
- WO 2004007448 A
- WO 2004024688 A
- WO 04065366 A
- WO 04080962 A
- WO 04111042 A
- WO 05044791 A
- WO 05044796 A
- WO 05048710 A
- WO 05049596 A
- WO 05066125 A
- WO 05092897 A
- WO 06000355 A
- WO 06029799 A
- WO 06056281 A
- WO 06056282 A
- WO 06089633 A
- WO 07048545 A
- WO 9916748 A
- JP 14205984 A
- WO 2004080962 A
- US 5162602 A
- US 4761373 A
- US 4443971 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A


### In der Beschreibung aufgeführte Nicht-Patentliteratur


- **S. SUZUKI et al.** *Chem. Pharm. Bull.,* 1967, vol. 15, 1120
- **VON R. SCHMIERER ; H. MILDENBERGER.** *Liebigs Ann. Chem.,* 1985, 1095
- **ITO M.** *Bioscience, Biotechnology and Biochemistry,* 2003, vol. 67, 1230-1238
- **SAMBROOK et al.** Molecular Cloning, A Laboratory Manual. Cold Spring Harbor Laboratory Press, 1989
- **WINNACKER.** Gene und Klone. VCH, 1996
- **CHRISTOU.** *Trends in Plant Science,* 1996, vol. 1, 423-431
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106